# DEMANDE DE BREVET EUROPEEN

(11) **EP 3 786 414 A1**
(43) Date de publication de la demande: **03.03.2021**
(21) Numéro de dépôt: 20201603.6
(22) Date de dépôt: 07.12.2017
(51) Int. Cl.: E06B 9/72

(54) **MODULE DE SUSPENSION, ACTIONNEUR ÉLECTROMÉCANIQUE COMPRENANT UN TEL MODULE DE SUSPENSION ET INSTALLATION DE FERMETURE OU DE PROTECTION SOLAIRE COMPRENANT UN TEL MODULE DE SUSPENSION OU UN TEL ACTIONNEUR ÉLECTROMÉCANIQUE**

(30) Priorité: 07.12.2016 FR 1662056
(62) Demande divisionnaire de: 17821835.0
(71) Demandeur: Somfy Activites SA, 74300 Cluses (FR)
(72) Inventeur: LEMAITRE, Sébastien, 74300 CLUSES (FR); PEILLEX, Julien, 74300 CLUSES (FR); BRONDEX, Adrien, 74300 CLUSES (FR)
(74) Mandataire: Lavoix

(57) **Abrégé**

Un module de suspension (10) d'un moteur électrique (16) à l'extérieur d'un carter tubulaire (18) d'un actionneur électromécanique pour une installation de fermeture ou de protection solaire comprend un organe de suspension (100) monobloc. L'organe de suspension (100) s'étend selon un axe longitudinal (X100) destiné à être aligné sur un axe de rotation (X16) d'un rotor du moteur électrique (16). L'organe de suspension (100) comprend plusieurs plateaux annulaires (120₂, 120₄) disposés perpendiculairement à l'axe longitudinal (X100) et juxtaposés le long de cet axe, dont au moins un plateau annulaire intermédiaire. Chaque plateau annulaire intermédiaire est relié à chacun des deux plateaux (120₂, 120₄) qui lui sont adjacents par au moins trois ponts de connexion (128).

## Description

L'invention a trait à un module de suspension d'un moteur électrique à l'intérieur d'un carter tubulaire d'un actionneur électromécanique, au sein d'une installation de fermeture ou de protection solaire.

Dans le domaine des installations de fermeture ou de protection solaire, il est connu de réaliser un actionneur électrique en insérant un moteur électrique, le plus souvent de type moto-réducteur, à l'intérieur d'un carter tubulaire. Un tel actionneur est destiné à être monté à l'intérieur d'un tube d'enroulement d'un écran enroulable, au sein d'une installation de fermeture ou de protection solaire.

Un tel écran peut être par exemple, un store, un volet roulant ou une grille.

En fonctionnement, un moteur électrique génère des vibrations qui peuvent être transmises aux éléments qui entourent le moteur électrique, notamment le carter tubulaire et/ou le tube d'enroulement, ce qui génère du bruit lorsque l'installation de fermeture ou de protection solaire fonctionne.

Pour pallier ce problème, il est connu de EP 1 727 959 B1 d'utiliser un ou des moyens de couplage élastique pour absorber des vibrations selon une direction longitudinale, tout en résistant à une torsion sous l'effet d'un couple, ce qui permet de positionner correctement le moteur électrique par rapport à son environnement. Toutefois, cette solution ne donne que partiellement satisfaction car les modules de suspension connus peinent à répondre à une double exigence, à savoir présenter une raideur en torsion relativement importante, permettant une bonne transmission de couple autour de l'axe de rotation du rotor du moteur électrique, et présenter une souplesse en cisaillement et en flexion pour assurer un découplage mécanique entre le moteur et son environnement, afin de limiter la propagation des vibrations à partir de ce moteur.

Dans les moyens de couplage élastique connus, il est possible d'utiliser des cylindres en matériaux synthétiques, notamment en polyuréthane, pour immobiliser un moteur par rapport à un carter. Ces cylindres en matériaux synthétiques présentent des capacités limitées de transmission de couple. Augmenter leur raideur fait courir le risque de dégrader les performances de filtration du bruit. En outre, de tels cylindres en matériau synthétique sont difficiles à produire en grande série et à assembler et sont la source de défauts de production importants.

Il est également connu d'amortir les vibrations issues du moteur en utilisant des pièces en matériau viscoélastique. Les matériaux viscoélastiques introduisent effectivement de l'amortissement du fait de la nature propre du matériau. Ils sont susceptibles de fluer de manière importante, ce qui engendre des problèmes au niveau de la définition des fins de course de fonctionnement d'un actionneur, voire des oscillations de la barre de charge d'un écran. En outre, les performances vibro-acoustiques de ces matériaux viscoélastiques ont tendance à se dégrader dans le temps.

C'est à ces problèmes qu'entend répondre l'invention en proposant un nouveau module de suspension qui présente une rigidité ou raideur en torsion suffisante pour permettre une solidarisation d'un moteur électrique en rotation avec un élément complémentaire, tout en étant suffisamment souple, notamment en cisaillement et/ou en flexion, pour limiter fortement la transmission de vibrations, donc de bruit, du moteur électrique vers son environnement.

A cet effet, l'invention concerne un module de suspension d'un moteur électrique à l'extérieur d'un carter tubulaire d'un actionneur électromécanique pour une installation de fermeture ou de protection solaire, comprenant un organe de suspension monobloc, s'étendant selon un axe longitudinal destiné à être aligné sur un axe de rotation d'un rotor du moteur électrique. Conformément à l'invention, cet organe de suspension comprend plusieurs plateaux annulaires disposés perpendiculairement à l'axe longitudinal et juxtaposés le long de cet axe, dont au moins un plateau annulaire intermédiaire, alors que chaque plateau annulaire intermédiaire est relié à chacun des deux plateaux qui lui sont adjacents, par au moins trois ponts de connexion.

Grâce à l'invention, les trois ponts de connexion qui relient chaque plateau annulaire intermédiaire aux plateaux adjacents permettent de répartir les efforts de torsion appliqués sur l'organe de suspension lors de la transmission d'un couple. Ceci confère à l'organe de suspension de l'invention une bonne raideur en torsion et une meilleure répartition du couple à transmettre que les moyens de couplage de l'art antérieur. D'autre part, les trois ponts de connexion qui sont situés de chaque côté de chaque plateau constituent des points d'appui qui permettent aux plateaux de se déformer élastiquement, ce qui confère à l'organe de suspension de l'invention une souplesse en flexion et/ou en cisaillement élevée. Par flexion, on entend une déformation par rotation d'une extrémité de l'organe de suspension par rapport à l'autre autour d'une direction perpendiculaire à son axe longitudinal. Par cisaillement, on entend une déformation de l'organe de suspension par translation selon une direction perpendiculaire à son axe longitudinal. La structure de l'organe de suspension avec des plateaux annulaires juxtaposés le long de son axe longitudinal permet également de limiter la transmission de vibrations selon une direction parallèle à cet axe.

Le fait d'utiliser au moins trois ponts de connexion de chaque côté de chaque plateau annulaire permet de minimiser l'épaisseur de ces plateaux annulaires à la fois selon une direction radiale et selon une direction parallèle à l'axe longitudinal, ce qui permet de diminuer le coût matière de l'organe de suspension. L'invention permet d'obtenir le meilleur compromis entre la résistance au couple et la raideur en flexion et cisaillement tout en obtenant également une pièce facile à produire, notamment par injection. La division par trois des efforts de torsion au niveau de chaque pont, du fait de la répartition de ces ponts sur le pourtour d'un plateau annulaire, induit des sections de plateau, ou branches, plus courtes, ce qui est en principe un désavantage pour la flexion. Toutefois, le design des branches, par exemple le fait qu'elles sont rectilignes plutôt que circulaires, leur dimensionnement adapté, peut largement compenser ce désavantage.

Grâce à la structure envisagée pour l'organe de suspension de l'invention, celui-ci peut être réalisé par injection dans une matière non chargée en fibres de verre, c'est-à-dire grâce à un procédé de fabrication bien maîtrisé et économique.

Selon des aspects avantageux mais non obligatoires de l'invention, un tel organe de suspension peut incorporer une ou plusieurs des caractéristiques suivantes, prises dans toutes combinaisons techniquement admissibles :
- Chaque pont de connexion forme un point d'appui permettant aux plateaux, notamment aux sections de plateau de part et d'autre de ce point d'appui, de se déformer lorsque des efforts de flexion et de cisaillement sont appliqués à l'organe de suspension.
- Les ponts de connexion situés sur une première face axiale d'un plateau annulaire intermédiaire sont décalés angulairement, autour de l'axe longitudinal, par rapport aux ponts de connexion situés sur une deuxième face axiale du même plateau annulaire, opposée à la première face axiale.
- Sur chaque face axiale d'un plateau annulaire intermédiaire, les ponts de connexion sont régulièrement répartis autour de l'axe longitudinal.
- Chaque face axiale d'un plateau annulaire intermédiaire est équipée de trois ponts de connexion répartis à 120° autour de l'axe longitudinal, alors que deux ponts de connexion disposés sur les deux faces axiales opposées de ce plateau annulaire intermédiaire sont décalés angulairement de 60° ou 180° autour de l'axe longitudinal.
- Chaque plateau annulaire est formé par une succession de poutres, de préférence rectilignes, alors que chaque pont de connexion est disposé à la jonction entre deux poutres adjacentes selon la circonférence du plateau annulaire.
- Certaines au moins des poutres d'un plateau annulaire travaillent en compression lorsque l'organe de suspension subit un effort de torsion autour de son axe longitudinal, permettant ainsi le passage de couple.
- Au moins une poutre d'une paire de deux poutres adjacentes travaille en flexion autour d'un pont de connexion, ce qui assure la souplesse de l'organe de suspension et contient les vibrations à l'intérieur de l'organe de suspension.
- L'épaisseur d'un plateau intermédiaire, mesurée parallèlement à l'axe longitudinal, est croissante en se rapprochant d'un pont de connexion.
- Le module de suspension comprend un tube polygonal disposé à l'intérieur du ou des plateaux intermédiaires de l'organe de suspension, ce tube polygonal étant configuré pour transmettre un couple entre deux portions d'extrémité du module de suspension, ce tube polygonal étant, de préférence, équipé de nervures internes de rigidification.
- Le tube polygonal et une portion intermédiaire de l'organe de suspension, qui inclut les plateaux, sont pourvus d'organes de blocage relatif en rotation autour de l'axe longitudinal, de préférence sous la forme de reliefs complémentaires en prise par coopération de formes.
- Le module de suspension comprend un embout rapporté sur la portion intermédiaire, alors que des organes de blocage prévus sur le tube polygonal sont verrouillés, axialement et en rotation, dans des logements correspondants de la portion intermédiaire lorsque l'embout est en place sur la portion intermédiaire.
- Lorsque l'embout est en place sur la portion intermédiaire, une jupe de cet embout entoure radialement une portion du tube polygonal et s'inscrit dans une section polygonale intérieure de la portion intermédiaire.

Selon un autre aspect, l'invention concerne un actionneur électromécanique pour une installation de fermeture ou de protection solaire, cet actionneur comprenant un moteur électrique monté à l'intérieur d'un carter tubulaire. Conformément à l'invention, cet actionneur électromécanique comprend au moins un module de suspension tel que mentionné ci-dessus, disposé à l'extérieur du carter tubulaire. Un tel actionneur électromécanique est plus robuste et moins bruyant que ceux de l'état de la technique.

Selon encore un autre aspect de l'invention, celle-ci concerne une installation de fermeture de protection solaire qui comprend un module de suspension tel que mentionné ci-dessus et/ou un actionneur électromécanique tel que mentionné ci-dessus.

L'invention sera mieux comprise et d'autres avantages de celle-ci apparaitront plus clairement à la lumière de la description qui va suivre de deux modes de réalisation d'un module de suspension, d'un mode de réalisation d'un actionneur électrique et de trois modes de réalisation d'une installation conformes à son principe, donnée uniquement à titre d'exemple et faite en référence aux dessins annexés dans lesquels :
- la figure 1 est une coupe schématique transversale de principe d'une installation de protection solaire conforme à un premier mode de réalisation de l'invention et comprenant un store enroulable,
- la figure 2 est une vue schématique en perspective d'une installation de fermeture conforme à un second mode de réalisation de l'invention et comprenant un volet roulant,
- la figure 3 est une coupe schématique longitudinale d'un tube d'enroulement appartenant à l'une des installations des figures 1 et 2 et comprenant un actionneur électromécanique conforme à l'invention,
- la figure 4 est une vue à plus grande échelle du détail IV à la figure 3,
- la figure 5 est une vue à plus grande échelle du détail V à la figure 3,
- la figure 6 est une vue en perspective d'un module de suspension utilisé dans la partie de l'actionneur électromécanique représentée à la figure 4,
- la figure 7 est une vue de côté du module de suspension de la figure 6,
- la figure 8 est une coupe en perspective selon la ligne VIII-VIII à la figure 7,
- la figure 9 est une vue d'extrémité dans le sens de la flèche IX à la figure 7,
- la figure 10 est une coupe selon la ligne X-X à la figure 9,
- la figure 11 est une vue en perspective d'un plateau annulaire appartenant à l'module de suspension des figures 6 à 10, selon l'orientation de la figure 6 et à plus grande échelle,
- la figure 12 est une vue en perspective d'un module de suspension utilisé dans la partie de l'actionneur électromagnétique représentée à la figure 5,
- la figure 13 est une vue de côté du module de suspension de la figure 12,
- la figure 14 est une coupe selon la ligne XIV-XIV à la figure 13,
- la figure 15 est une vue d'extrémité dans le sens de la flèche XV à la figure 13,
- la figure 16 est une vue en perspective, comparable à la figure 6, pour un module de suspension conforme à un autre mode de réalisation de l'invention,
- la figure 17 est une coupe axiale du module de suspension de la figure 16,
- la figure 18 est une vue perspective éclatée du module de suspension des figures 16 et 17,
- la figure 19 est une vue à plus grande échelle du détail 19 à la figure 18,
- la figure 20 est une vue en perspective selon un autre angle d'un embout du module de suspension des figures 16 à 19,
- la figure 21 est une vue analogue à la figure 18 pour un module de suspension conforme à un autre mode de réalisation de l'invention, et
- la figure 22 est une vue analogue à la figure 20 pour un embout du module de suspension de la figure 21

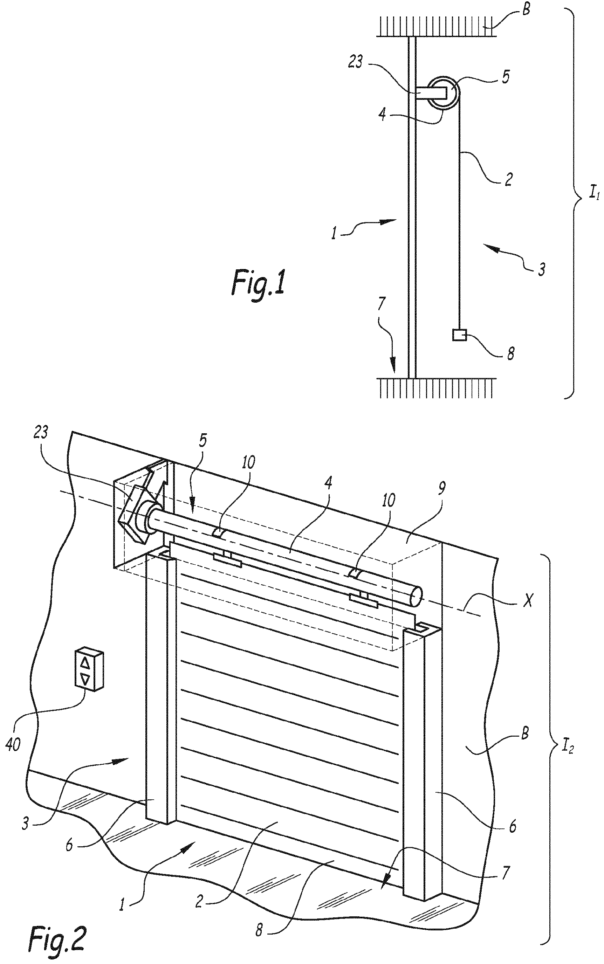

On décrit tout d'abord, en référence aux figures 1 et 2, deux installations domotiques I₁ et I₂ conformes à l'invention et installées chacune dans un bâtiment B comportant une ouverture 1, fenêtre ou porte, équipée d'un écran 2 appartenant à un dispositif d'occultation 3, en particulier un store motorisé ou un volet motorisé.

Le dispositif d'occultation 3 peut être un store, notamment en toile, enroulable, tel que représenté en figure 1, un store plissé ou à lames, auquel cas l'installation I₁ est une installation de protection solaire, ou un volet, tel que représenté en figure 2, ou une grille, auquel cas l'installation I₂ est une installation de fermeture.

Dans le premier mode de réalisation illustré à la figure 1, l'écran 2 du dispositif d'occultation 3 est enroulé sur un tube d'enroulement 4 entraîné par un dispositif d'entraînement motorisé 5. L'écran 2 est mobile entre une position enroulée, en particulier haute, et une position déroulée, en particulier basse. Le dispositif d'occultation 3 comprend un support 23 de l'écran 2, ainsi que le tube d'enroulement 4 pour enrouler l'écran 2.

De manière connue, le store enroulable du dispositif d'occultation 3, comporte une toile, formant l'écran 2 du store enroulable 3. Une première extrémité de l'écran 2, en l'espèce l'extrémité supérieure de l'écran 2 dans la configuration assemblée du dispositif d'occultation 3 dans l'installation domotique I₁, est fixée au tube d'enroulement 4. De plus, une deuxième extrémité de l'écran 2, en l'espèce l'extrémité inférieure de l'écran 2 dans la configuration assemblée du dispositif d'occultation 3 dans l'installation domotique I₁, est fixée à une barre de charge 8, dont le poids exerce une tension sur l'écran 2. Sur la figure 1, la toile formant l'écran 2 est réalisée à partir d'un matériau textile.

De manière connue, la première extrémité de l'écran 2 est fixée au tube d'enroulement 4, notamment sur toute la longueur du tube d'enroulement 4, de sorte à pouvoir enrouler et dérouler l'écran 2 autour du tube d'enroulement 4.

Dans le cas d'un store enroulable, la position haute enroulée correspond à une position de fin de course haute prédéterminée, ou encore à la mise en appui de la barre de charge 8 de l'écran 2 contre le support 23 de l'écran 2 du store enroulable 3, et la position basse déroulée correspond à une position de fin de course basse prédéterminée, ou à la mise en appui de la barre de charge 8 de l'écran 2 contre un seuil 7 de l'ouverture 1, ou encore au déroulement complet de l'écran 2. L'installation I₁ représentée à la figure 1 ne comporte pas de caisson et la toile formant l'écran 2, enroulée sur le tube d'enroulement 4, est visible.

Dans le second mode de réalisation illustré à la figure 2, l'écran 2 appartient à un volet roulant 3 qui comporte un tablier comprenant des lames horizontales articulées les unes aux autres, formant l'écran 2 du volet roulant 3 et guidées par deux glissières latérales 6. Ces lames sont jointives lorsque l'écran 2 atteint sa position basse déroulée. La lame supérieure de l'écran 2 est accrochée au tube d'enroulement 4 par deux attaches 10.

Dans ce cas, la position haute enroulée correspond à la mise en appui d'une lame d'extrémité finale 8 en forme de L du tablier 2 du volet roulant 3 contre un bord d'un caisson 9 du volet roulant 3, alors que la position basse déroulée correspond à la mise en appui de la lame d'extrémité finale 8 du tablier 2 du volet roulant 3 contre un seuil 7 de l'ouverture 1.

Le tube d'enroulement 4 est disposé à l'intérieur du caisson 9 du volet roulant 3. Le tablier 2 s'enroule et se déroule autour du tube d'enroulement 4 et est logé au moins en partie à l'intérieur du caisson 9. De manière générale, le caisson 9 est disposé au-dessus de l'ouverture 1, ou encore en partie supérieure de l'ouverture 1. Le caisson 9 fait partie intégrante du dispositif de maintien de l'écran 2.

Le dispositif d'entraînement motorisé 5 est commandé par une unité de commande 40. L'unité de commande 40 peut être, par exemple, une unité de télécommande locale, comme visible à la figure 2, ou une unité de commande centrale, non représentée. L'unité de commande centrale pilote éventuellement l'unité de commande locale, ainsi que d'autres unités de commande locales similaires et réparties dans le bâtiment B.

L'unité de commande centrale peut être en communication avec une station météorologique, à l'intérieur ou à l'extérieur du bâtiment B, incluant notamment un ou plusieurs capteurs pouvant être configurés pour déterminer, par exemple, une température, une luminosité, ou encore une vitesse de vent dans le cas d'une station météorologique extérieure.

Une unité de commande comparable, non représentée, est utilisée dans le premier mode de réalisation.

A la figure 2, seul un support d'écran 23 est représenté. En pratique, l'installation I₂ comprend de préférence un support d'écran 23 à chaque extrémité du tube d'enroulement 4.

Le dispositif d'entraînement motorisé 5 est, de préférence, configuré pour exécuter les commandes de déroulement ou d'enroulement de l'écran 2 du dispositif d'occultation 3, pouvant être émises, notamment, par une unité de commande locale ou centrale.

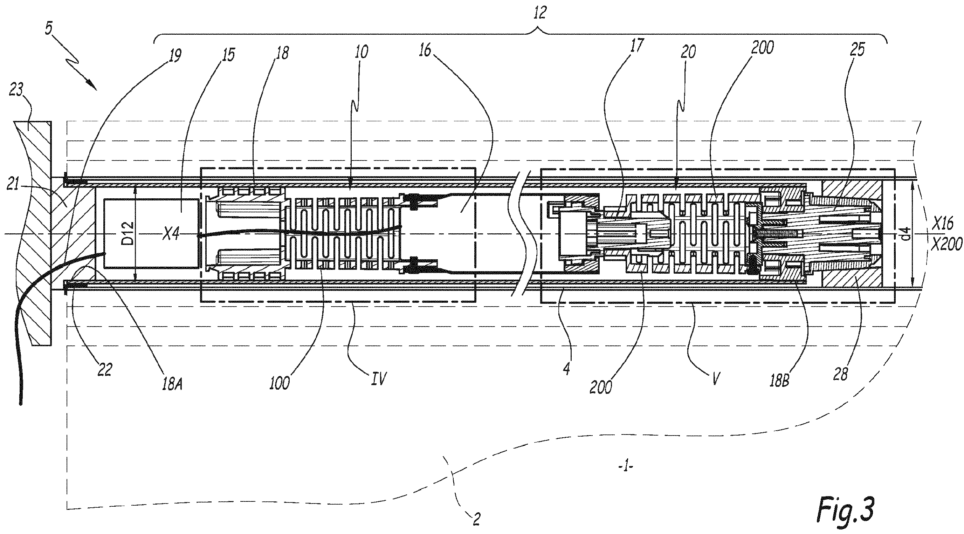

La figure 3 est une coupe longitudinale d'un dispositif d'entraînement motorisé 5 qui peut être soit celui de l'installation de la figure 1, soit celui de l'installation de la figure 2. Ce dispositif d'entraînement motorisé 5 comprend un actionneur électromécanique 12, de type tubulaire, permettant de mettre en rotation le tube d'enroulement 4, de sorte à dérouler ou enrouler l'écran 2 du dispositif d'occultation 3. Dans l'état monté, l'actionneur électromécanique 12 est inséré dans le tube d'enroulement 4. Pour cela, le diamètre intérieur d4 du tube d'enroulement 4 est sensiblement supérieur au diamètre externe D12 de l'actionneur électromécanique 12, de sorte que l'actionneur électromécanique 12 peut être inséré dans le tube d'enroulement 4, lors de l'assemblage du dispositif d'occultation 3.

Selon un autre mode de réalisation, l'actionneur électromécanique intègre un moteur électrique cylindrique, mais il est inséré dans un rail de section carrée ou rectangulaire, ouvert sur un côté. Le carter de l'actionneur peut alors être cylindrique ou de section carrée ou rectangulaire similaire à la section du rail. L'actionneur entraîne alors un arbre d'entraînement sur lequel s'enroulent des cordons de déploiement de l'écran.

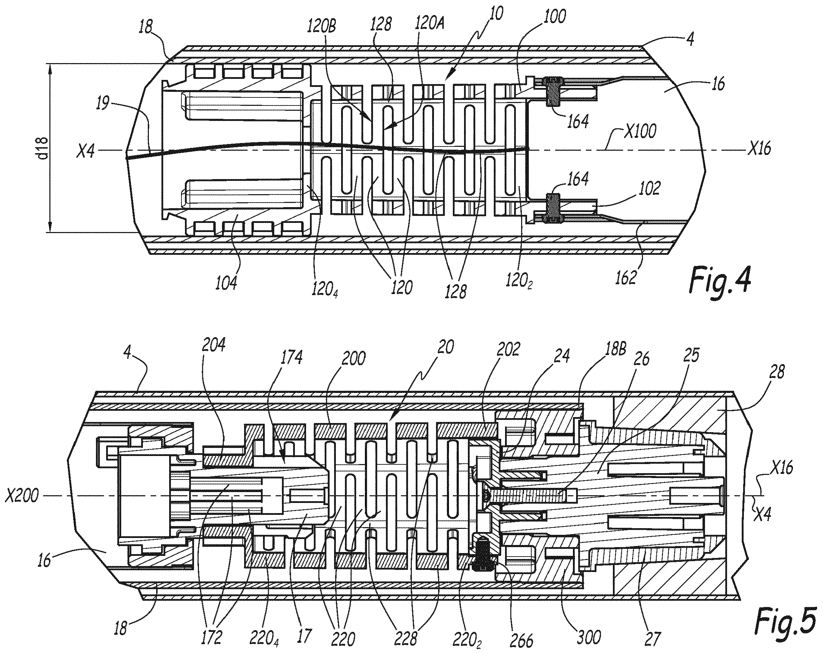

L'actionneur électromécanique 12 comprend un moteur électrique 16. Le moteur électrique 16 comprend un rotor et un stator non-représentés et positionnés de manière coaxiale autour d'un axe de rotation X16, qui est confondu avec l'axe de rotation X4 du tube d'enroulement 4 en configuration montée du dispositif d'entraînement motorisé 5. En pratique, le moteur électrique 16 peut être un moto-réducteur qui inclut un réducteur et un frein non représentés mais connus en soi. L'arbre de sortie 17 du moteur électrique 16 est visible aux figures 3 et 5. Il est pourvu de cannelures internes 172 destinés à coopérer avec des reliefs externes d'un arbre d'entraînement du moteur électrique 16, couplé au rotor, du frein ou du réducteur. Cet arbre de sortie 17 est également pourvu de cannelures externes 174.

L'actionneur électromécanique 12 comprend également un carter 18 de forme tubulaire, à section circulaire centrée sur l'axe X16. Le carter 18 peut être métallique ou réalisé dans un matériau synthétique. Le diamètre externe D12 de l'actionneur 12 est, en pratique, égal à celui du carter tubulaire 18.

Le carter tubulaire 18 est immobilisé par rapport à l'organe de support 23 au moyen d'une tête 21 qui obture une première extrémité 18A du carter 18. Un palier 22 interposé entre le carter 18 et l'arbre d'enroulement 4 permet à cet arbre de tourner autour de l'axe X4, alors que l'actionneur 12 reste fixe par rapport au support 23.

Des moyens de commande de l'actionneur électromécanique 12, permettant le déplacement de l'écran 2 du dispositif d'occultation 3, comprennent au moins une unité électronique de contrôle 15. Cette unité électronique de contrôle 15 est apte à mettre en fonctionnement le moteur électrique 16 de l'actionneur électromécanique 12 et, en particulier, permettre l'alimentation en énergie électrique du moteur électrique 16.

Ainsi, l'unité électronique de contrôle 15 commande, notamment, le moteur électrique 16, de sorte à ouvrir ou fermer l'écran 2, comme décrit précédemment.

L'unité électronique de contrôle 15 comprend notamment un module non représenté de réception d'ordres de commande, les ordres de commande étant émis par un émetteur d'ordres, tel que la télécommande 40. Préférentiellement, le module de réception d'ordres de commande de l'unité électronique de contrôle 15 est de type sans fil. En particulier, ce module est configuré pour recevoir des ordres de commande radioélectriques. Le module de réception d'ordres de commande peut également permettre la réception d'ordres de commande transmis par des moyens filaires.

Les moyens de commande de l'actionneur électromécanique 12 comprennent des moyens matériels et/ou logiciels. A titre d'exemple nullement limitatif, les moyens matériels peuvent comprendre au moins un microcontrôleur.

Ici, l'actionneur électromécanique 12 comprend un câble d'alimentation électrique 19 permettant son alimentation en énergie électrique depuis le secteur ou depuis une ou plusieurs batteries, non représentées, à travers le support 23 et la tête 21. Alternativement, ou en complément, des batteries ou piles sont intégrées à l'intérieur du carter 18 de l'actionneur électromagnétique 12.

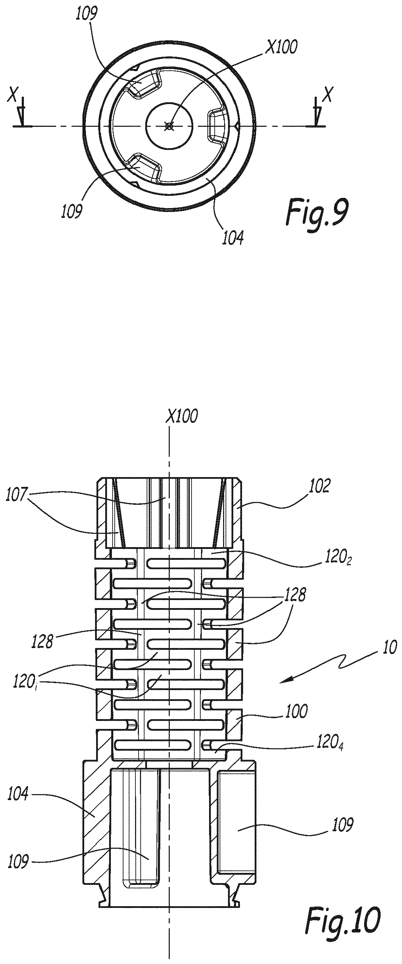

Le moteur électrique 16 est suspendu à l'intérieur du carter 17 au moyen d'un premier module de suspension 10 plus particulièrement visible aux figures 4 et 6 à 11 et d'un deuxième module de suspension 20 plus particulièrement visible aux figures 5 et 12 à 15.

Le premier module de suspension 10 est prévu pour coopérer, d'une part, avec un tube enveloppe fixe 162 du moteur électrique 16. Ce tube enveloppe 162 est solidaire, en rotation autour de l'axe X16, avec le stator du moteur électrique 16. Le premier module de suspension 10 est prévu pour coopérer, d'autre part, avec le carter 18. Le premier module de suspension 10 comprend un organe de suspension 100. Le deuxième module de suspension 20 comprend un organe de suspension 200.

L'organe de suspension 100 s'étend selon un axe longitudinal X100 qui est superposé à l'axe X16 en configuration non montée de l'actionneur électromécanique 12 dans le tube d'enroulement 4. L'organe de suspension 100 s'étend, le long de l'axe X100, entre une première portion d'extrémité 102 et une deuxième portion d'extrémité 104. La première portion d'extrémité 102 est de forme extérieure tubulaire à section globalement circulaire sur l'essentiel de sa circonférence et présente deux rainures 105 pourvues chacune d'un orifice 106 de passage d'une vis 164 de solidarisation de la première portion d'extrémité 102 au tube enveloppe 162. Une interface de solidarisation en rotation des éléments 100 et 162 autour des axes X16 et X100 est ainsi créée par les orifices 106. Cette interface peut, en variante prendre une autre forme, notamment des zones des éléments 100 et 162 destinées à être collées l'une sur l'autre.

Sur l'intérieur, la première portion extrémité 102 est pourvue de nervures internes 107, dont la hauteur est croissante selon l'axe X100 en direction de la deuxième portion d'extrémité 104 et qui ont pour fonction de renforcer mécaniquement l'organe de suspension 100.

La deuxième portion d'extrémité 104 de l'organe de suspension 100 est de forme extérieure circulaire centrée sur l'axe X100 avec un diamètre D104 défini notamment en niveau de nervures circonférentielles 108 de la deuxième portion extrémité 104. Ce diamètre D104 est égal au diamètre intérieur d18 du carter 18. La géométrie de la deuxième portion d'extrémité 104 n'a pas d'effet sur le fonctionnement ou la liaison de l'organe de suspension. Les nervures représentées sont uniquement le résultat d'enlèvement de matière pour la production de l'organe de suspension par injection.

La deuxième portion d'extrémité 104 comprend également trois compartiments creux 109 accessibles, radialement à l'axe X100, depuis l'extérieur, à travers des fentes 1092 et qui ont pour fonction de former un espace de réception pour des goupilles, non représentées, de fixation de l'organe de suspension au carter 18 de l'actionneur 12.

Entre les portions d'extrémité 102 et 104, l'organe de suspension 100 comprend une portion intermédiaire 110 qui est formée par une succession de plateaux annulaires plans 120. Chaque plateau annulaire 120 est plan en ce sens qu'il s'étend selon un plan principal P120 perpendiculaire à l'axe X100. Son épaisseur e120 est mesurée parallèlement à l'axe X100 et est au moins cinq fois inférieure à la dimension maximale du plateau annulaire mesurée dans le plan principal P120

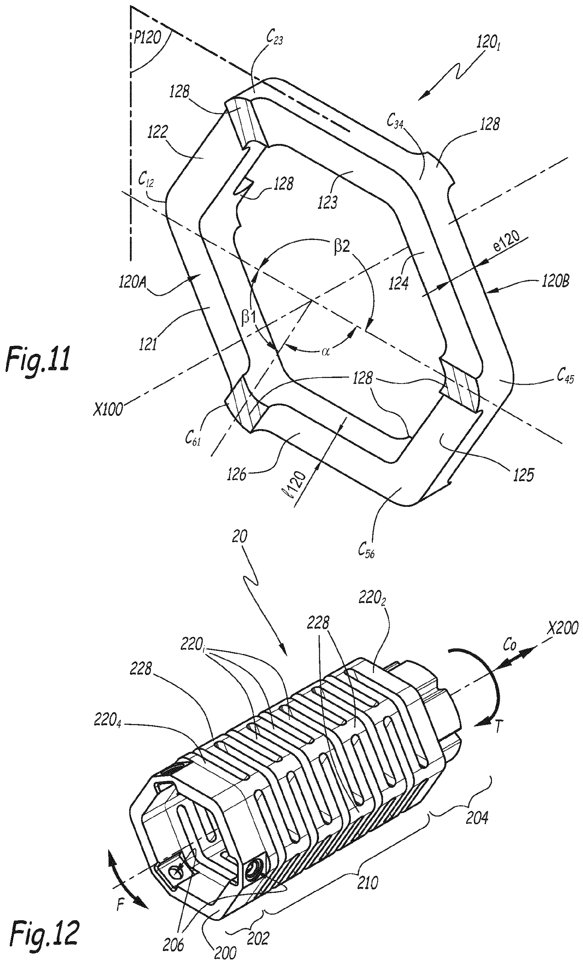

En pratique, et comme cela ressort plus particulièrement de la figure 11, un plateau annulaire 120 est constitué de six branches rectilignes 121, 122, 123, 124, 125, 126 formant un hexagone régulier à coins arrondis.

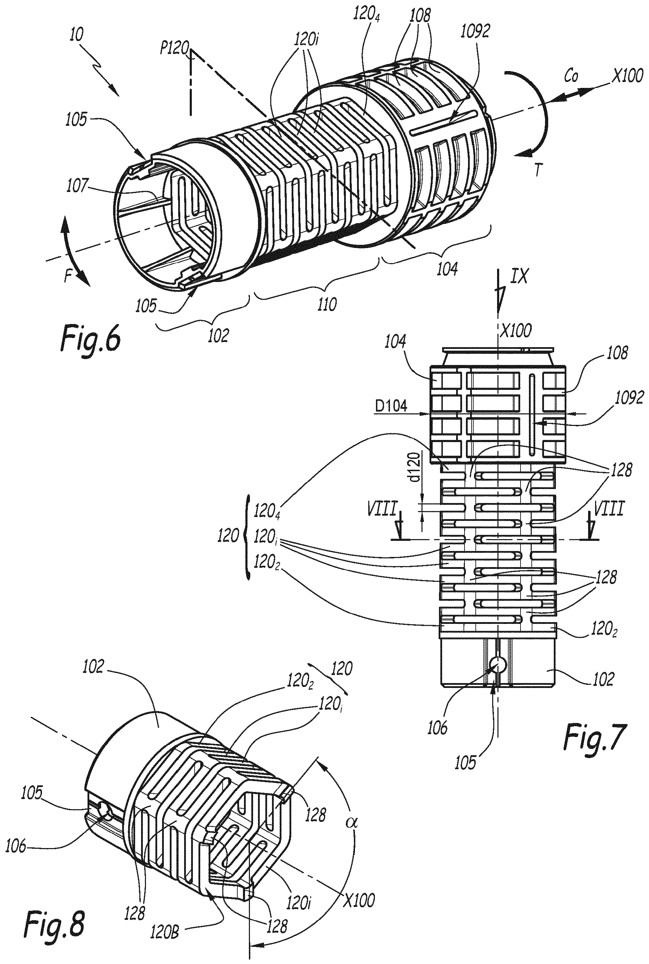

Comme cela ressort notamment des figures 6, 7, 8 et 10, trois types de plateau 120 sont à considérer. Un premier plateau d'extrémité 120₂ est accolé à la première portion d'extrémité 102. Un deuxième plateau d'extrémité 120₄ est accolé à la deuxième portion d'extrémité 104. Les autres plateaux constituent des plateaux intermédiaires 120ᵢ qui sont chacun disposés, le long de l'axe X100, entre deux autres plateaux 120.

On note respectivement 120A et 120B les deux faces axiales opposées d'un plateau annulaire intermédiaire 120ᵢ. Une face axiale d'un plateau 120ᵢ est une face de ce plateau qui est perpendiculaire à l'axe X100. En considérant que le plateau 120ᵢ visible aux figures 8 et 11 est le même, la face 120A de ce plateau 120 tournée vers la première portion d'extrémité 102 est visible à la figure 11, alors que sa face 120B tournée vers la deuxième portion d'extrémité 104 est visible à la figure 8.

Chaque plateau intermédiaire 120ᵢ est relié aux deux plateaux 120₂, 120₄ ou 120ᵢ adjacents par trois ponts de connexion 128. Chaque pont de connexion 128 est constitué par une quantité de matière qui relie deux plateaux annulaires adjacents 120 et qui est monobloc avec ces plateaux. En effet, l'organe de suspension 100 est, dans son ensemble, réalisé de façon monobloc, de sorte que les ponts de connexion 128 sont, entre autres, monobloc avec les autres parties de l'organe de suspension 100.

Du côté de la face axiale 120A, la liaison entre chaque plateau annulaire intermédiaire 120ᵢ et le plateau adjacent est rigide en torsion autour de l'axe X100 car les efforts de torsion sont répartis autour de l'axe X100 entre les trois ponts de connexion 128. De la même façon, du côté de la face 120B de chaque plateau intermédiaire 120ᵢ, un effort de torsion est réparti entre les trois ponts 128.

En outre, un effort de torsion T autour de l'axe X100, appliqué sur l'organe de suspension 100 entre les portions d'extrémité 102 et 104, se répartit sur les multiples connexions réalisées entre les plateaux annulaires 120, au niveau des ponts de connexion 128. Dans l'exemple, l'organe de suspension 100 comprend onze plateaux annulaires 120, dont les deux plateaux d'extrémité 120₂ et 120₄ et neuf plateaux intermédiaires 120ᵢ. En pratique, le nombre de plateaux intermédiaires peut être compris entre 1 et 15, de préférence entre 5 et 12.

Ainsi, l'organe de suspension 100 est rigide dans un sens de torsion autour de l'axe X100, représenté par la flèche T à la figure 6. Une fois immobilisé dans le carter tubulaire 18, l'organe de suspension 100 peut donc constituer un point fixe de référence pour le moteur électrique 16. En d'autres termes, l'organe de suspension 100 permet de reprendre un couple exercé par le moteur 16 à l'intérieur du carter tubulaire 18.

D'autre part, la structure de l'organe de suspension 100 lui confère une souplesse relativement élevée dans un sens de flexion perpendiculaire à l'axe X100, représenté par la double flèche F à la figure 6. En effet, les ponts de connexion 128 constituent autant de points d'appui permettant aux plateaux, notamment aux sections de plateaux de part et d'autre du point d'appui, de se déformer lorsque des efforts de flexion et de cisaillement sont appliqués à l'organe de suspension 100. Le matériau constitutif de l'organe de suspension 100 n'a pas être viscoélastique. Il peut en particulier s'agir de polyacétal ou de polyamide qui sont des matériaux stables dans le temps et dont les propriétés n'ont pas tendance à se dégrader. En outre, ces matériaux sont relativement peu chers et permettent d'envisager une production en grande série.

On remarque également que, dans le cas d'un effort de torsion T exercé autour de l'axe X100 entre les portions d'extrémité 102 et 104, certaines au moins des branches 121 à 126 travaillent en compression, c'est-à-dire dans un sens dans lequel ces poutres sont résistantes. Ceci permet de dimensionner les sections transversales de chacune des branches 121 à 126 de façon optimisée, en diminuant leur épaisseur axiale e120 et leur largeur ℓ120 mesurée dans le plan P120 perpendiculairement à leur longueur, c'est-à-dire selon une direction proche d'une direction radiale à l'axe X100, tout en conservant une distance d120, mesurée parallèlement à l'axe X100 entre deux plateaux 120 adjacents, relativement importante, ce qui permet d'augmenter la souplesse en flexion ou en cisaillement de l'organe de suspension 100, sans diminuer sa raideur en torsion. En d'autres termes, la géométrie des plateaux 120 permet de maximiser le diamètre de l'organe 100, tout en diminuant les efforts de traction/compression dans les branches 121 à 126.

Selon une variante non représentée de l'invention, les branches 121 à 126 peuvent être en forme d'arc de cercle, auquel cas les plateaux annulaires 120 sont globalement de forme circulaire ou ovale. Les branches 121 et 126 travaillent alors à la fois en flexion et en compression lorsque l'organe de suspension est soumis à un effort de torsion T.

Selon un aspect avantageux de l'invention, les ponts de connexion 128 situés sur une face 120A d'un plateau annulaire intermédiaire 120ᵢ sont décalés angulairement des ponts de connexion 128 situés sur son autre face axiale 120B. Dans l'exemple, les trois ponts de connexion 128 ménagés sur la face 120A sont répartis régulièrement sur cette face 120A, à 120° autour de l'axe X100, alors qu'il en est de même pour les ponts de connexion 128 ménagés sur la face axiale 120B. Les ponts de connexion 128 disposés sur la face axiale 120A sont ménagés sur trois coins de l'hexagone différents des coins sur lesquels sont ménagés les ponts de connexion 128 sur la face axiale 120B. On note C₁₂ le coin d'un plateau 120ᵢ entre ses branches 121 et 122, C₂₃ le coin de ce plateau entre ses branches 123 et 124, C₃₄ le coin de ce plateau entre ses branches 123 et 124, C₄₅ le coin de ce plateau entre ses branches 124 et 125, C₅₆ le coin de ce plateau entre les branches 125 et 126 et C₆₁ le coin de ce plateau entre les branches 126 et 121. Du côté de la face axiale 120A, les ponts de connexion 128 sont ménagés au niveau des coins C₆₁, C₂₃ et C₄₅, alors que, du côté de la face axiale 120B, les ponts de connexion 128 sont ménagés au niveau des coins C₁₂, C₃₄ et C₅₆. On note α l'angle de décalage angulaire autour de l'axe X100, entre deux ponts de connexion 128 situés sur une même face axiale 120A ou 120B d'un plateau annulaire intermédiaire 120ᵢ. Dans l'exemple, l'angle α vaut 120°. On note β l'angle de décalage entre deux ponts de connexion situés sur les deux faces axiales opposées 120A et 120B. Dans l'exemple, l'angle β peut prendre deux valeurs, à savoir β₁=60° et β₂=180°.

Cette répartition des ponts de connexion facilite la transmission de couple au sein de l'organe de suspension 100.

En pratique, quel que soit le nombre de ponts de connexion 128, la valeur minimale de l'angle β est, de préférence, égale à la moitié de la valeur de l'angle α.

On considère une paire de deux branches ou poutres adjacentes, c'est-à-dire deux branches ou poutres reliées par un coin, au niveau d'un des ponts 128. Tel est par exemple le cas des branches 121 et 122 qui sont adjacentes au niveau du pont 128 ménagé sur la face 120B dans le coin C₁₂. Lorsque l'organe 100 est soumis à un effort de torsion T, au moins une branche ou poutre de cette paire de branches ou poutres 121 et 122 travaille en flexion autour de ce pont 128. Il en va de même dans les autres paires de branches ou poutres adjacentes. En d'autres termes, les branches 121 à 126 tendent à fléchir sous charge de torsion, autour des ponts 128, ce qui confère une certaine souplesse à l'organe 100 et lui permet, notamment, de contenir les vibrations.

L'organe de suspension 200 est réalisé sur le même principe que l'organe de suspension 100 et comprend également des plateaux annulaires plans 220 disposés dans une portion intermédiaire 210 de l'organe de suspension 200, cette portion intermédiaire étant ménagée entre une première portion d'extrémité 202 et une deuxième portion d'extrémité 204 de l'organe de suspension 200 qui s'étend selon un axe longitudinal X200.

Les plateaux 220 se répartissent entre un plateau d'extrémité 220₂ accolé à la première portion d'extrémité 202, un plateau d'extrémité 220₄ accolé à la deuxième portion d'extrémité 204 et des plateaux intermédiaires 220ᵢ disposés, le long de l'axe X200, entre les plateaux d'extrémité 220₂ et 220₄.

La partie intermédiaire 210 de l'organe de suspension 200 est analogue à la partie intermédiaire 110 de l'organe de suspension 100, chaque plateau annulaire intermédiaire 220ᵢ étant relié au plateau adjacent par deux séries de ponts de connexion 228 qui sont au moins au nombre de trois. Ceci permet d'obtenir les mêmes avantages, en termes de rigidité en torsion et de souplesse en flexion, qu'avec l'organe de suspension 100.

Selon un aspect optionnel de l'invention, les portions 110 et 210 sont identiques, ce qui est avantageux en termes de fabrication notamment.

La première portion d'extrémité 202 de l'organe de suspension 100 est de forme intérieure hexagonale et pourvue de trois orifices 206 de passage de trois vis de solidarisation de l'organe de suspension 200 avec un flasque 24. Une seule de ces vis est visible aux figures 3 et 5, avec la référence 266, étant précisé que les deux autres vis sont réparties à 120° par rapport à cette vis, autour des axes X16 et X200 superposés. Le flasque 24 est lui-même immobilisé sur un arbre 25 de sortie de l'actionneur 12, au moyen d'une vis 26 qui est alignée sur l'axe X16. Ainsi, les orifices 206 et la forme intérieure de la portion d'extrémité 202 constituent une interface de solidarisation de l'organe 200 avec l'arbre 25, à travers le flasque 24 et la vis 26.

Alternativement, la première portion d'extrémité 202 de l'organe de suspension 200 est solidarisée directement avec l'arbre de sortie 25 de l'actionneur électromécanique 12. D'autres formes de solidarisation en rotation que les vis peuvent également être envisagées, par exemple une coopération de formes appropriées.

L'arbre 25 est équipé d'une garniture 27 qui coopère avec une roue 28 immobilisée dans l'arbre d'enroulement 4 par coopération de formes. La roue 28 constitue un organe de transmission de couple entre l'arbre 25 et le tube d'enroulement 4.

Un organe 300 de guidage en rotation est immobilisé dans le carter 18, à proximité de sa deuxième extrémité 18B opposée à sa première extrémité 18A. L'organe 300 forme un palier qui supporte l'arbre 25 au niveau de l'extrémité 18B, avec possibilité de rotation de l'arbre 25 par rapport au carter, autour de l'axe X16.

Par ailleurs, la portion d'extrémité 204 de l'organe de suspension 200 est pourvue de cannelures internes 230 complémentaires des cannelures externes 174 de l'arbre 17, ce qui permet de solidariser en rotation l'organe de suspension 200 et l'arbre de sortie 17 du moteur 16. La portion d'extrémité 204 est donc solidarisée en rotation avec l'arbre de sortie 17 du moteur électrique 16 par une liaison glissière. Ainsi, lorsque le moteur 16 fonctionne, le couple disponible sur l'arbre de sortie 17 peut être transmis à l'arbre 25, et au-delà au tube d'enroulement 4, à travers l'organe de suspension 200. Pour ce faire, il est important que l'organe de suspension 200 présente une bonne rigidité en torsion dans le sens de la flèche T à la figure 12, ce qui est obtenu grâce à la structure de sa portion intermédiaire 210 qui comprend les plateaux 220 et les ponts de connexion 228. Par ailleurs, l'organe de suspension 200 présente une bonne souplesse en flexion et en cisaillement, notamment dans le sens de la flèche F à la figure 12, ce qui permet de filtrer les bruits générés au niveau du moteur électrique 16.

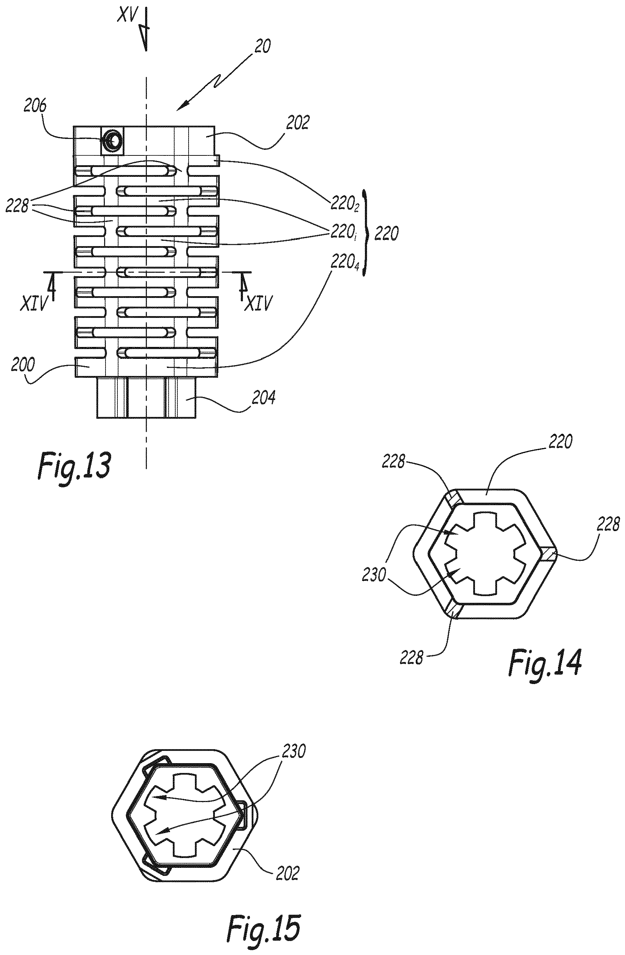

Les figures 14 et 15 montrent les sections hexagonales extérieures et intérieures de l'organe de suspension 200.

Les propriétés et les variantes mentionnées ci-dessus au sujet du premier organe de suspension 100 s'appliquent également au deuxième organe de suspension 200.

Ces deux organes de suspension présentent, outre une souplesse en flexion dans le sens des flèches F aux figures 6 et 12, une souplesse en compression, selon une direction parallèle aux axes X100 et X200 représentée par la double flèche Co sur ces figures. Ceci permet également de filtrer les vibrations provenant du moteur 16. Cette souplesse en compression découle de la souplesse de l'ensemble de l'organe de compression selon une direction parallèle à l'axe X100 ou X200.

Dans ce mode de réalisation, le premier module de suspension 10 est formé, dans son intégralité, par l'organe de suspension 100. Le deuxième module de suspension 20 est formé par l'assemblage de l'organe de suspension 200 avec le flasque 24. Dans les deux cas, la partie active de l'organe de suspension, comprenant les plateaux 120, est monobloc.

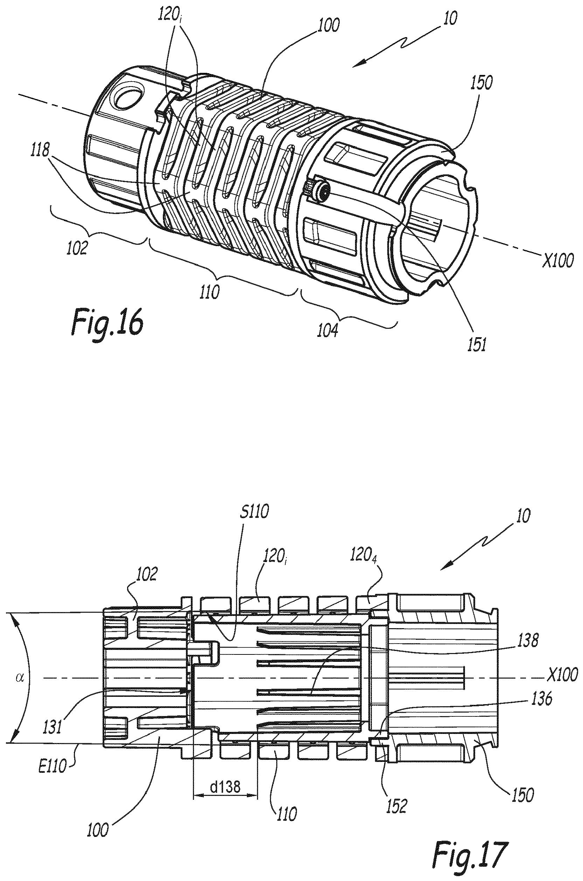

Les figures 16 à 20 représentent un module de suspension 10 conforme à un autre mode de réalisation et susceptible d'être utilisé à la place du module de suspension 10 tel que décrit relativement aux figures 3 à 11. Dans ce qui suit, on décrit principalement ce qui distingue ce module de suspension de celui des figures 3 à 11. Pour le reste, ce module de suspension 10 est comparable à celui des figures 3 à 11, présente les mêmes caractéristiques et fonctionne de la même façon.

Le module de suspension 10 des figures 16 à 19 comprend un organe de suspension monobloc 100, comprenant une portion d'extrémité 102 et une portion intermédiaire ou corps 110. Le module de suspension 10 comprend une deuxième portion d'extrémité 104, constituée par un premier embout 150 rapporté sur le la portion intermédiaire 110 au moyen de trois vis 151.

Comme précédemment, on note X100 l'axe longitudinal de l'organe de suspension 100. Les éléments 100 et 150 sont juxtaposés le long de l'axe X100.

Comme dans le précédent mode de réalisation, l'organe de suspension 100 et, en particulier la partie intermédiaire 110, comprend un certain nombre de plateaux annulaires plans 120 dont deux plateaux d'extrémité 120₂ et 120₄ et un certain nombre de plateaux intermédiaires 120ᵢ. Comme précédemment, des ponts de connexion 128 relient chaque plateau intermédiaire 120ᵢ avec les plateaux voisins, en particulier trois ponts de connexion.

L'épaisseur e120 d'un plateau intermédiaire 120ᵢ varie sur sa circonférence. Plus précisément, cette épaisseur augmente en se rapprochant d'un pont 128, de telle sorte que l'épaisseur e140 d'une fente 140 ménagée, axialement, entre deux plateaux intermédiaires 120ᵢ, et circonférentiellement, entre deux ponts 128 qui réunissent ces deux plateaux, diminue en se rapprochant des ponts 128. En pratique, la zone de jonction Z₁₀₀ entre un pont de connexion 128 et les deux plateaux situés de part et d'autre de celui-ci le long de l'axe X100 est de forme arrondie avec un rayon de courbure R inférieur à la valeur maximale de l'épaisseur e140.

Cette géométrie des plateaux 120ᵢ et des zones de jonction Z100 permet de lisser les contraintes mécaniques qui s'appliquent au sein du corps 110, entre les parties 120ᵢ et 128. La fabrication par moulage est aussi aisée que pour le mode de réalisation des figures 3 à 11.

D'autre part, comme cela ressort de la figure 17, la surface interne S110 de la portion intermédiaire 110 de l'organe de suspension 100 est inscrite dans une enveloppe circulaire E110 représentée en traits d'axe, qui est convergente en direction de l'extrémité 102 et dont on note α l'angle au sommet. Cet angle α a une faible valeur, inférieures à 3° et, de préférence, de l'ordre de 0,5° de sorte que la différence de diamètre entre la surface S110 au voisinage de la portion 102 et cette même surface au niveau du disque 120₄ le plus éloigné de la portion 102 est de quelques dixièmes de millimètres. Le caractère tronconique de la surface S110 facilite le démoulage de l'organe de suspension 100 et permet d'utiliser un diamètre maximum du côté de du premier embout 150, qui est destiné à immobiliser dans le carter 18 visibles aux figures 3 et 4 ou dans un carter de même nature. La partie de diamètre minimum de la portion intermédiaire 110 est située du côté de la portion 102, c'est-à-dire du côté de la masse suspendue constituée par le moteur 16, ce côté étant celui où les déplacements sont de plus grandes amplitudes. Ceci favorise la suspension de la masse suspendue.

Un tube polygonal 130, dans l'exemple hexagonal, est intégré au module de suspension 10 en étant disposé à l'intérieur de la portion intermédiaire 110. Ce tube hexagonal est, par exemple, réalisé en polyamide 6.6 chargé en fibre de verre ou en polybutylène téréphtalate (PBT) chargé en fibres de verre, qui présente un module d'Young de l'ordre de 12 500 MégaPascals, ou en métal. Dans tous les cas, le matériau du tube est à la fois plus rigide et plus résistant mécaniquement que le matériau, notamment le polyacétal ou le polyamide, utilisé pour le moulage du corps 100.

La forme extérieure du tube hexagonal 130 est adaptée à la forme intérieure de la portion intermédiaire 110, de sorte que, une fois alignée sur l'axe X100, le tube hexagonal 130 s'étend, radialement à l'intérieur des plateaux 120ᵢ, à faible distance radiale de ceux-ci et sans les toucher. Le tube hexagonal 130 n'interfère donc pas avec l'atténuation des vibrations obtenu grâce à l'organe de suspension 100.

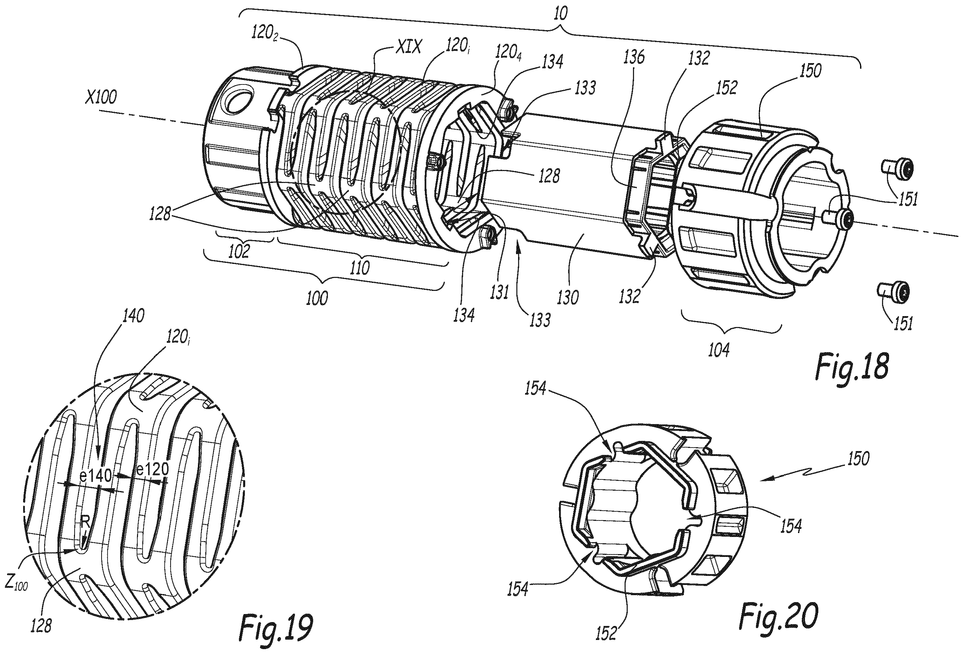

L'immobilisation du tube hexagonal 130 à l'intérieur de l'organe de suspension 100 est obtenue au moyen de trois languettes ou pattes, dont deux sont visibles à la figure 18 avec la référence 132 et qui sont engagées dans trois encoches 134 de forme correspondante prévues dans le plateau 120₄, dont deux sont visibles à la figure 18. Une fois les pattes 132 engagées dans les encoches 134, les éléments 100 et 130 sont solidarisés en rotation autour de l'axe X100, par coopération de formes.

Par ailleurs, la mise en place du premier embout 150 à l'extrémité de l'organe de suspension 100 et le serrage des vis 151 permettent de retenir les pattes 132 à l'intérieur des encoches 134. Les pattes 132 sont prises en sandwich entre le fond des encoches 134 et l'embout 150, ce qui immobilise axialement le tube hexagonal 130 à l'intérieur de l'organe de suspension 100, en particulier par rapport aux plateaux intermédiaires 120ᵢ.

Le tube polygonal comprend également des encoches 133, au niveau d'une extrémité 131 opposée aux pattes 132. Ces encoches coopèrent avec des nervures correspondantes, non représentées, intérieures à l'organe de suspension 100. En fonctionnement normal, les encoches 133 ne sont pas en contact avec les nervures correspondantes.

La longueur du tube polygonal est légèrement supérieure à la partie active de l'organe de suspension, à savoir la partie intermédiaire 110 comprenant les plateaux 120i.

Le premier embout 150 est pourvu d'une jupe 152 à section hexagonale qui vient coiffer, c'est-à-dire entourer radialement, une portion 136 du tube hexagonal 130 qui est également en forme de jupe hexagonale, avec des dimensions transversales à l'axe X100 qui sont inférieures à celle de la jupe 152. On obtient ainsi un recouvrement axial de la jupe 136 par la jupe 152, comme visible à la figure 17. Ceci garantit un centrage efficace du tube hexagonal 130 à l'intérieur de l'organe de suspension 100. La jupe 152 s'inscrit également dans la section hexagonale intérieure de la portion intermédiaire 110 de l'organe de suspension 100. Le premier embout 150 et l'organe de suspension 100 sont ainsi bloqués l'un par rapport à l'autre en rotation.

Afin de permettre le montage du premier embout 150 sur l'organe de suspension 100, avec mise en place de la jupe 152 autour de la jupe 136, la jupe 152 est interrompue localement par des encoches 154, pour laisser passer les pattes 132 en configuration montée du module de suspension 10.

Comme visible à la figure 17, le tube hexagonal 130 est équipé, sur sa surface périphérique interne, de nervures de rigidification 138 qui s'étendent, à partir de son extrémité la plus proche des pattes 132, en direction de la portion d'extrémité 102 lorsque le tube hexagonal 130 est monté à l'intérieur de l'organe de suspension 100. Les nervures 138 s'arrêtent à une distance axiale d138 de l'extrémité 131 du tube hexagonal 130 opposé aux languettes 132. Cette distance d138 est non nulle, ce qui garantit qu'il n'y a pas d'interférence entre ces nervures 138 et une partie du moteur 16 introduite dans l'organe de suspension 100 à travers la portion d'extrémité 102, même si cette partie du moteur 16 s'engage à l'intérieur du tube hexagonal 130, à travers son extrémité 131.

En cas de rupture d'un ou plusieurs ponts de connexion 128 et/ou d'un ou plusieurs plateaux 120ᵢ, le tube hexagonal 130 permet de transmettre un couple autour de l'axe X100, entre les portions d'extrémité 102 et 104 de l'organe de suspension 100, en venant se bloquer à l'intérieur de la forme hexagonale intérieur de l'organe de suspension 100. Le tube hexagonal 130 assure donc une fonction de sécurité à l'intérieur de l'organe de suspension 100.

On remarque que, une fois monté au sein de l'organe de suspension 100, le tube hexagonal 130 assure une fonction de renfort en torsion de cet organe de suspension si celui-ci subit un couple dépassant un couple prédéfini, par exemple de l'ordre du couple nominal pour lequel est dimensionné l'actionneur ou de deux fois ce couple nominal. En venant se bloquer à l'intérieur de la forme hexagonale intérieure de l'organe de suspension 100, il s'oppose efficacement à un risque de déchirement des ponts de connexion 128 par cisaillement puisqu'il peut absorber une partie d'un couple exercé entre les portions d'extrémité 102 et 104. Le tube participe donc à la transmission de couple entre les extrémités 102 et 104, y compris lorsque le corps 100 n'est pas endommagé. Ceci est le cas lorsque le module subit un couple supérieur à un couple prédéfini, notamment supérieur au couple nominal, ou si l'organe de suspension a subi un fluage important, lorsque le module subit un couple inférieur au couple nominal. Les risques de rupture des ponts 128 ou des plateaux 120 sont donc minimisés, voire annulés.

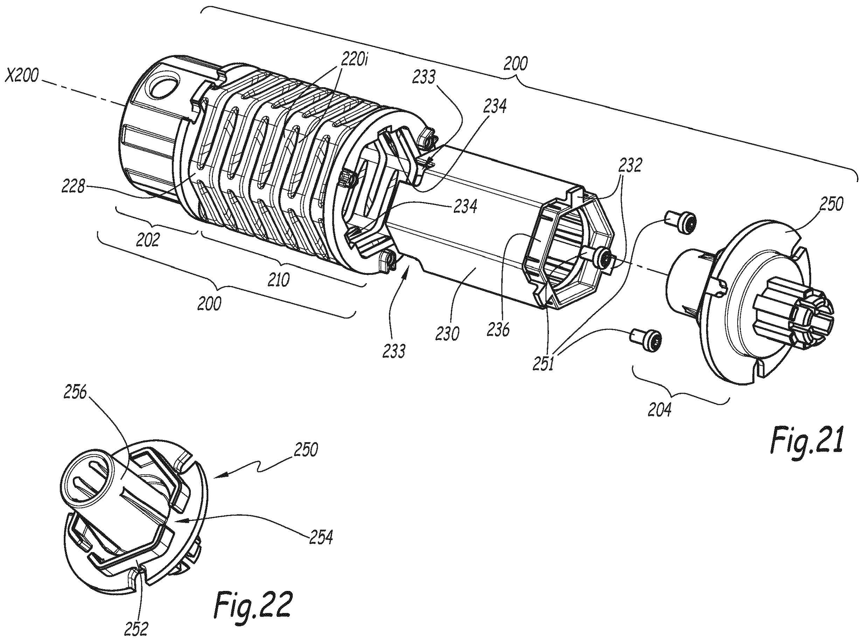

Le module de suspension 20 des figures 20 et 21 comprend un organe de suspension monobloc 200 auquel est associé un deuxième embout 250, rapporté sur la portion intermédiaire 210, au moyen de vis 251, de manière équivalente au premier embout 150.

L'organe de suspension 200 est identique à l'organe de suspension 100 et comprend une première extrémité 202 et une portion intermédiaire 210 qui inclut des plateaux 220 respectivement identiques aux éléments 102, 110 et 120 du mode de réalisation des figures 16 à 20, qui sont reliés par des ponts de connexion 228.

Un tube polygonal 230 de préférence hexagonal et identique au tube 130, est inséré dans la portion 210, comme dans le mode de réalisation des figures 16 à 20. Des reliefs 232 et 234 respectivement identiques aux reliefs 132 et 134 sont prévus et bloqués en prise par le deuxième embout 250 lorsqu'il est en place sur la portion intermédiaire 210. L'embout 250 joue ici le rôle du flasque 24 représenté à la figure 5. Le tube polygonal 230 comprend également des encoches 233 qui ont la même fonction que les encoches 133 du tube 130.

L'embout 250 est pourvu d'une jupe 252 et d'encoches 254 qui ont la même fonction que les parties 152 et 154 du mode de réalisation des figures 16 à 20, à savoir entourer une portion 236 du tube hexagonal 230 et s'inscrire dans une section hexagonale intérieure de la portion intermédiaire 210. L'embout 250 comprend, en outre, un manchon central 256 dont la fonction est de constituer un fût de guidages pour une vis de fixation non représentée, analogue à la vis 26 visible à la figure 5.

Lors du montage dans l'actionneur 12, le diamètre maximum de la portion intermédiaire 210 de l'organe de suspension 200 se situe du côté du deuxième embout 250 et la partie de diamètre minimum de la portion intermédiaire 210 est située du côté de la portion 202, c'est-à-dire du côté de la masse suspendue constituée par le moteur 16.

Comme les organes de suspension 100 et 200 des modes de réalisation des figures 16 à 22 sont identiques, en utilisant un seul type d'organe de suspension 100/200, avec deux embouts 150 et 250 différents, on favorise la production industrielle des modules de suspension 10 et 20, tout en gardant les avantages en usage, comme notamment le fait de favoriser la suspension de la masse suspendue.

Il en va de même lorsque les tubes polygonaux 130 et 230 sont identiques comme envisagé ci-dessus.

Dans les deux modes de réalisation des figures 16 à 22, les tubes polygonaux 130 et 230 protègent mécaniquement des câbles électriques qui traversent longitudinalement les modules de suspension 10 et/ou 20, le cas échéant, comme le câble 19 du premier mode de réalisation.

Dans le mode de réalisation des figures 16 à 20, le module de suspension 10 est formé des pièces 100, 130 et 150. Dans le mode de réalisation des figures 21 et 22, le module de suspension est formé des pièces 200, 230 et 250.

Quel que soit le mode de réalisation, le nombre de ponts de connexion 128 ou 228 peut être supérieur ou égal à quatre.

L'installation est représentée ci-dessus dans le cas où les deux modules de suspension 10 et 20 sont disposés à l'intérieur du carter tubulaire 18. Selon l'invention, l'un au moins de ces éléments de suspension peut être disposé à l'extérieur d'un tel carter. Alternativement, un module de suspension supplémentaire peut être disposé à l'extérieur d'un tel carter.

Le nombre de branches d'un plateau annulaire 120 ou 220 peut être différent de six. Dans ce cas, la répartition des ponts de connexion 128 ou 228 est adaptée.

En variante, la section des organes de suspension 100 et 200 peut être polygonale, sans être hexagonale, par exemple octogonale. Dans ce cas, si le module de suspension inclut un tube polygonal, la section de ce tube est adaptée à celle de l'organe de suspension.

Selon une autre variante, un seul module de suspension 10 ou 20 peut être utilisé au sein de l'actionneur 12. L'éventuel autre module de suspension peut alors être conforme à l'état de la technique.

Les modes de réalisation et variantes envisagés ci-dessus peuvent être combinés entre eux pour générer de nouveaux modes de réalisation de l'invention.

## Revendications

1. Module de suspension (10, 20) d'un moteur électrique (16) à l'extérieur d'un carter tubulaire (18) d'un actionneur électromécanique (12) pour une installation (I₁,I₂) de fermeture ou de protection solaire comprenant un organe de suspension (100, 200), monobloc et s'étendant selon un axe longitudinal (X100, X200) destiné à être aligné sur un axe de rotation (X16) d'un rotor du moteur électrique, l'organe de suspension comprenant plusieurs plateaux annulaires (120, 220) disposés perpendiculairement à l'axe longitudinal et juxtaposés le long de cet axe, dont au moins un plateau annulaire intermédiaire (120ᵢ, 220ᵢ), **caractérisé en ce que** chaque plateau annulaire intermédiaire est relié à chacun des deux plateaux (120, 220) qui lui sont adjacents par au moins trois ponts de connexion (128, 228).

2. Module de suspension selon la revendication 1, **caractérisé en ce que** chaque pont de connexion (128, 228) forme un point d'appui permettant aux plateaux (120, 220), notamment aux sections de plateau de part et d'autre de ce point d'appui, de se déformer lorsque des efforts de flexion et de cisaillement sont appliqués à l'organe de suspension (100, 200).

3. Module de suspension selon l'une des revendications précédentes, **caractérisé en ce que** les ponts de connexion (128, 228) situés sur une première face axiale (120A) d'un plateau annulaire intermédiaire (120ᵢ, 220ᵢ) sont décalés angulairement, autour de l'axe longitudinal (X100, X200), par rapport aux ponts de connexion (128, 228) situés sur une deuxième face axiale (120B) du même plateau annulaire (120ᵢ, 220ᵢ), opposée à la première face axiale (120A) et **en ce que**, de préférence, sur chaque face axiale (120A, 120B) d'un plateau annulaire intermédiaire (120ᵢ, 220ᵢ), les ponts de connexion (128, 228) sont régulièrement répartis autour de l'axe longitudinal (X100, X200).

4. Module de suspension selon la revendication 3, **caractérisé en ce que** chaque face axiale (120A, 120B) d'un plateau annulaire intermédiaire (120ᵢ, 220ᵢ) est équipée de trois ponts de connexion (128, 228) répartis à 120° autour de l'axe longitudinal (X100, X200) et **en ce que** deux ponts de connexion disposés sur les deux faces axiales opposées de ce plateau annulaire intermédiaire sont décalés angulairement (β₁, β₂) de 60° ou 180° autour de l'axe longitudinal.

5. Module de suspension selon l'une des revendications précédentes, **caractérisé en ce que** chaque plateau annulaire (120) est formé par une succession de poutres (121-126), de préférence rectilignes, et **en ce que** chaque pont de connexion (128) est disposé à la jonction (C₁₂-C₆₁) entre deux poutres adjacentes selon la circonférence du plateau annulaire et **en ce que**, de préférence, certaines au moins des poutres (121-126) d'un plateau annulaire travaillent en compression lorsque l'organe de suspension (100, 200) subit un effort de torsion (T) autour de son axe longitudinal (X100, X200).

6. Module de suspension selon la revendication 5, **caractérisé en ce qu'**au moins une poutre d'une paire de deux poutres (121-126) adjacentes travaille en flexion autour d'un pont de connexion (128, 228) entre ces poutres lorsque l'organe de suspension (100, 200) subit un effort de torsion (T) autour de son axe longitudinal (X100, X200).

7. Module de suspension selon l'une des revendications précédentes, **caractérisé en ce que** l'épaisseur (e120) d'un plateau intermédiaire (120ᵢ), mesurée parallèlement à l'axe longitudinal (X100, X200) est croissante en se rapprochant d'un pont de connexion (128, 228).

8. Module de suspension selon l'une des revendications précédentes, **caractérisé en ce qu'**il comprend un tube polygonal (130, 230) disposé à l'intérieur du ou des plateaux intermédiaires (120ᵢ, 220ᵢ) de l'organe de suspension (100, 200), ce tube polygonal étant configuré pour transmettre un couple entre deux portions d'extrémité (102, 104, 202, 204) du module de suspension (10, 20), ce tube polygonal étant, de préférence, équipé de nervures internes (138) de rigidification.

9. Module de suspension selon la revendication 8, **caractérisé en ce que** le tube polygonal (130) et une portion intermédiaire (110, 210) de l'organe de suspension (100, 200), qui inclut les plateaux (120, 220), sont pourvus d'organes (132, 134, 232, 234) de blocage relatif en rotation autour de l'axe longitudinal (X100, X200), de préférence sous la forme de reliefs complémentaires en prise par coopération de formes.

10. Module de suspension selon la revendication 9, **caractérisé en ce qu'**il comprend un embout (150, 250) rapporté sur la portion intermédiaire (110, 210) et **en ce que** des organes de blocage (132, 232) prévus sur le tube polygonal (130, 230) sont verrouillés, axialement et en rotation, dans des logements correspondants (134, 234) de la portion intermédiaire lorsque l'embout (150, 250) est en place sur la portion intermédiaire (110, 210).

11. Module de suspension selon la revendication 10, **caractérisé en ce que**, lorsque l'embout (150, 250) est en place sur la portion intermédiaire (110, 210), une jupe (152, 252) de cet embout entoure radialement une portion (136, 236) du tube polygonal (130, 230) et s'inscrit dans une section polygonale intérieure de la portion intermédiaire (110, 210).

12. Actionneur électromécanique (12) pour une installation (I₁, I₂) de fermeture ou de protection solaire, cet actionneur comprenant un moteur électrique (16) monté à l'intérieur d'un carter tubulaire (18), **caractérisé en ce que** l'actionneur électromécanique comprend au moins un module de suspension (10, 20) selon l'une des revendications précédentes, disposé à l'extérieur du carter tubulaire (18).

13. Installation (I₁, I₂) de fermeture ou de protection solaire comprenant un module de suspension (100, 200) selon l'une des revendications 1 à 11 et/ou un actionneur électromécanique (12) selon la revendication 12.
